# EUROPEAN PATENT SPECIFICATION

(11) **EP 4 218 513 B1**
(45) Date of publication and mention of the grant of the patent: **27.08.2025**
(21) Application number: 23151855.6
(22) Date of filing: 16.01.2023
(51) Int. Cl.: A47J 42/08

(54) **GRINDING DEVICE**
SCHLEIFVORRICHTUNG
DISPOSITIF DE MEULAGE

(30) Priority: 27.01.2022 CN 202220228548 U
(43) Date of publication of application: 02.08.2023
(73) Proprietor: Ningbo Funfine Electronic Commerce Co., Ltd., Ningbo Zhejiang 315000 (CN)
(72) Inventor: WANG, Weining, Ningbo, 315000 (CN)
(74) Representative: karo IP

(56) References cited:
- EP-A1- 2 050 377
- EP-B1- 1 662 955
- US-A1- 2016 015 214

## Description

### TECHNICAL FIELD

The present disclosure relates to the field of grinding technology, and in particular, to a grinding device.

### BACKGROUND

Grinding is generally classified into conventional grinding and modern grinding, the history of which can be traced back to thousands of years ago. As early as the 1730s, in order to adapt to the processing after the hardening of parts such as clocks, bicycles, sewing machines and guns, grinders using natural abrasive grinding wheels have been developed in the United Kingdom, Germany and the United States, respectively. The universal cylindrical grinder manufactured by Brown Sharp Company in the United States, which was exhibited at the Paris Expo in 1876, is a machine having the basic features of modern grinding machines for the first time. The full application of modern grinding technology is a necessary result of industrial development.

Grinding is a unit operation for converting a solid substance into smaller particles. Grinding can increase the surface area of an object substance, manufacture particles of a required size, grind the substance into a slurry, and improve the surface finish of the substance to meet the requirements of production and application. Grinding can be used for machining various metal and non-metal materials. The machined surface shapes comprise a planar surface, an inner cylindrical surface, an outer conical surface, a convex spherical surface, a concave spherical surface, a thread, a toothed surface and other profiles.

In order to grind different materials, humans will use various grinders, including manual mortar, mill driven by animals, wind or water, and electric mill driven by electric power, etc. Under the grinding action, the mechanical force overcomes the chain-coupling force inside the solid substance, and the size and shape of the ground substance are both changed. Grinding is also a finishing method, in which abrasive particles coated or embedded on a grinding tool are used to finish a machined surface by means of a relative movement between the grinding tool and a workpiece under a certain pressure. Alternatively, the abrasive particles and an additive are mixed and dispersed in a solvent, and are machined by the relative movement of the abrasive particles and the additive on the machined surface so as to achieve a higher finish.

Condiments refer to food ingredients such as spices, sauces or formulations. They are used to add into food before or during cooking, before or during eating so as to impart a specific flavor, enhance flavor, or supplement dish content. Their main function is to improve the quality of dishes and meet the sensory needs of consumers, thereby stimulating appetite and improving human health. Compared with granular or blocky condiments, powdered condiments are more convenient to use and have a stronger taste. However, most condiments used in daily life have an original bulk or granular structure, such as salt and pepper. With the development of industrial technology and the improvement of people's living standards, people use an instrument equipment to grind raw condiments into powder for sale and use. However, powdered condiments are easier to absorb moisture, not easy to keep for a long time, and the taste is easy to lose and affect the taste. This requires that condiments can be ground and used immediately, so household kitchen grinding devices came into being.

In recent years, coffee has been favored by young people. However, when we grind coffee beans, we usually need to fresh-grind and brew them and not leave them for a long time. This is because when the diameter of the coffee powder is reduced by a half, the volume of a single particle is reduced by 1/8, and the corresponding surface area of the total coffee powder is doubled. After the coffee beans are ground into coffee powder, their surface area increases exponentially, and the area in contact with the air increases by hundreds or thousands of times. Esters and aldehydes in the aromatic substances of coffee are the most volatile, and the aromatic substances are volatilized. Oxygen in the air can also oxidize the aromatic components, especially the fat, resulting in a putrid taste. The freshly ground coffee powder will quickly absorb the moisture in the air, increase the weight and reduce the effectiveness of extracting coffee ingredients, which requires a coffee grinder to grind and brew the coffee.

The patent with an authorization announcement No. CN215277504 U provides a condiment grinding device, comprising a grinding box, a coarse grinding mechanism and a fine grinding mechanism provided therein; the fine grinding mechanism comprises a motor I, the motor I is provided with a main rotary shaft, the main rotary shaft is provided with a driving wheel, the main rotary shaft is provided with a main trapezoidal grinding roller, a plurality of auxiliary trapezoidal grinding rollers are rotatably connected to a grinding box, and the plurality of auxiliary trapezoidal grinding rollers all cooperate with the main trapezoidal grinding roller. In the present utility model, a coarse grinding mechanism and a fine grinding mechanism are arranged, so that condiment can be ground step by step and a main trapezoid grinding roller and a plurality of auxiliary trapezoid grinding are arranged to be cooperated to perform grinding, so that the grinding effect is improved; the arrangement of the trapezoid can gradually reduce the gap between the trapezoid grinding roller and the grinding shaft, so that the material becomes more refined and achieves the effect of rapid grinding; the screen mesh and the pushing mechanism are arranged so that the screen mesh can swing back and forth to prevent accumulation and blockage of the condiment powder particles thereon. However, the condiment grinding device has a complex structure, and the stability of the device cannot be effectively ensured when the device is operated at a high speed. Moreover, the upper portion and the lower portion of the device are both provided with motors, so that the energy consumption is high, and the whole device occupies a large area and is heavy.

EP2 050 377 A1 discloses that the grinding tool having a housing and an adjustment ring that can be screwed onto it. The housing and the adjusting ring form the envelopes, so to speak, of the actual grinding elements, namely the grinding cone and the grinding ring. While the grinding cone is anchored in the housing, the grinding ring is enclosed by the adjusting ring and held axially, although the grinding ring remains rotatable relative to the adjusting ring. The grinding ring can be adjusted axially relative to the grinding cone by a screw movement of the adjusting ring. However, the construction is very complex and may not provide sufficient stability of the grinding ring during operation.

### SUMMARY

In view of the problems of poor stability and high energy consumption of the grinding device in the prior art, the present disclosure provides a grinding device having a good grinding effect, high stability in use, a reasonable layout, and easy cleaning. The grinding device has a reasonable design, a simple structure and easy operation, can grind materials into powders with different particle sizes, and has high grinding efficiency.

These objects are solved with a grinder according to the features of claim 1.

One concept of the present disclosure is to provide a grinding device, the grinding device is provided with a grinding mechanism and a motor, and the grinding mechanism performs grinding operation under the drive of the motor. The grinding mechanism comprises a male grinding head and a female grinding head, wherein the male grinding head is rotatably fitted in the female grinding head, and the size of grinding particles can be controlled by adjusting the gap between the male grinding head and the female grinding head.

Grinding teeth having a plurality of helical tooth lines are provided on an inner circumferential wall of the female grinding head, the female grinding head comprises a first portion and a second portion, first grinding teeth having a plurality of helical tooth lines are provided on an inner circumferential wall of the first portion, second grinding teeth having a plurality of helical tooth lines are provided on an inner circumferential wall of the second portion, and the number of the second grinding teeth is greater than that of the first grinding teeth; third grinding teeth having a plurality of helical tooth lines is provided on an outer circumferential wall of the male grinding head.

Further, the grinding device is provided with an adjustment mechanism, the adjustment mechanism is used for adjusting the position of the female grinding head, and the adjustment mechanism comprises a female grinding head fixing seat and a shifting ring.

A first thread is provided on an outer circumferential wall of the female grinding head fixing seat, and a second thread cooperating with the first thread is provided on an inner circumferential wall of the shifting ring. The height of the position of the female grinding head can be adjusted by rotating the shifting ring, so as to control the gap between the male grinding head and the female grinding head.

In some embodiments, the grinding device is provided with a motor, the motor is provided with a driving shaft, and the male grinding head is connected to the motor by means of the driving shaft.

The male grinding head is rotationally fitted with the female grinding head to form a plurality of material discharging ports at one end of the female grinding head, and the size of one side of each of the material discharging ports is greater than the size of the other side of each of the material discharging ports. The third grinding teeth extend from the upper end of the male grinding head to the lower end of the male grinding head. Such an arrangement enables the male grinding head to have better pressing and guidance effects on the material entering the grinding gap, and is easier to press the material into the grinding gap and to discharge the ground material in the grinding gap, thereby having better usage effects.

In some embodiments, the material discharging ports are trapezoidal.

In some embodiments, the material discharging ports are in the shape of a water drop.

In some embodiments, the material discharging ports are triangular.

The arrangement of a trapezoid shape or a water drop shape or a triangle shape can gradually reduce the gap between the male grinding head and the female grinding head, so that the material gradually becomes finer, thereby achieving the effect of rapid grinding.

The grinding device comprises a connection seat and a housing; the housing is made of a metal material or a plastic material, and the connection seat is detachably connected to the bottom of the housing.

The grinding device further comprises a material receiving mechanism; the material receiving mechanism comprises a body and a neck portion a material receiving mechanism; and a fourth thread is provided on an outer circumferential wall of the neck portion.

A third thread is provided on an inner circumferential wall of the connection seat, and the connection seat is connected to the material receiving mechanism by means of threads.

In some embodiments, a switch button is provided on the housing, the switch button is connected to the motor, and the operation or closing of the grinding device is controlled by pushing or pressing the switch button.

Compared with existing products, the present disclosure has the following advantages:
(1) the grinding device is provided with a male grinding head and a female grinding head, and can perform grinding at different degrees by adjusting a gap between the male grinding head and the female grinding head, thereby having a high grinding efficiency and a good grinding effect;
(2) the grinding device is provided with a female grinding head fixing seat, so that the stability of the female grinding head during operation can be effectively ensured; and
(3) the grinding device has a simple structure, a reasonable layout, simple and convenient operation, and low energy consumption.

### BRIEF DESCRIPTION OF THE DRAWINGS

The present application will be described in further detail below with reference to the drawings and preferred embodiments, but it will be appreciated by a person skilled in the art that the drawings are drawn for purposes of illustration of the preferred embodiments only, and thus should not be taken as limiting the scope of the present application. Furthermore, unless specifically indicated otherwise, the drawings are merely meant to conceptually represent compositions or configurations of the described objects and may contain exaggerated representations, and the drawings are not necessarily drawn to scale.
Fig. 1 is a first schematic view of a structure of a grinding device of the present disclosure;
FIG 2 is a cross-sectional view of a grinding device of the present disclosure;
Fig. 3 is a second schematic view of a structure of a grinding device of the present disclosure;
Fig. 4 is a schematic view of a structure of a female grinding head of the present disclosure;
Fig. 5 is a schematic view of a structure of a male grinding head of the present disclosure;
Fig. 6 is a schematic view of a structure of a shifting ring of the present disclosure;
FIG. 7 is a schematic view of a structure of a female grinding head fixing seat of the present disclosure;
FIG. 8 is a partially enlarged view of Fig. 2 of the present disclosure;
FIG. 9 is a third schematic view of a structure of a grinding device of the present disclosure;
FIG. 10 is a fourth structural view of a structure of a grinding device of the present disclosure; and
FIG. 11 is a partially enlarged view of Fig. 10 of the present disclosure.

### Description of reference numerals:

1. switch button; 2. material receiving mechanism; 3. housing; 4. driving shaft; 5. female grinding head fixing seat; 6. female grinding head fixing frame;7. connection seat; 8. port; 10. male grinding head; 11. third grinding tooth; 20. female grinding head; 21. first grinding tooth; 22. second grinding tooth; 30. shifting ring; 31. positioning hole; 32. second thread; 41. positioning assembly; 51. first thread; 52. limiting member; 71. third thread; and 72: fourth thread.

### DETAILED DESCRIPTION OF THE EMBODIMENTS

In order to enable a person skilled in the art to better understand the technical solutions of the present disclosure, the present disclosure will be described in detail and clearly with reference to the drawings and embodiments. It should be understood that the specific embodiments described herein are only intended to explain the present disclosure, but not to limit the present disclosure.

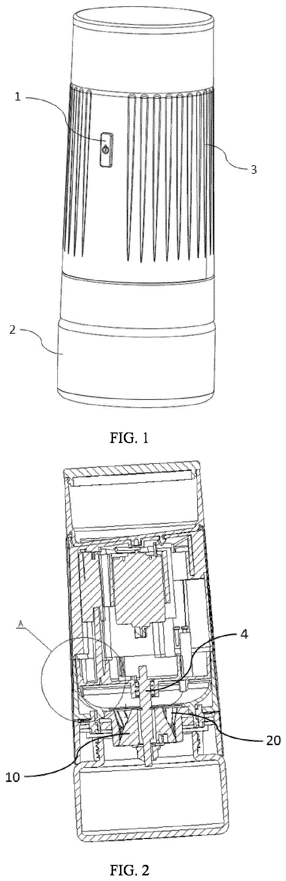

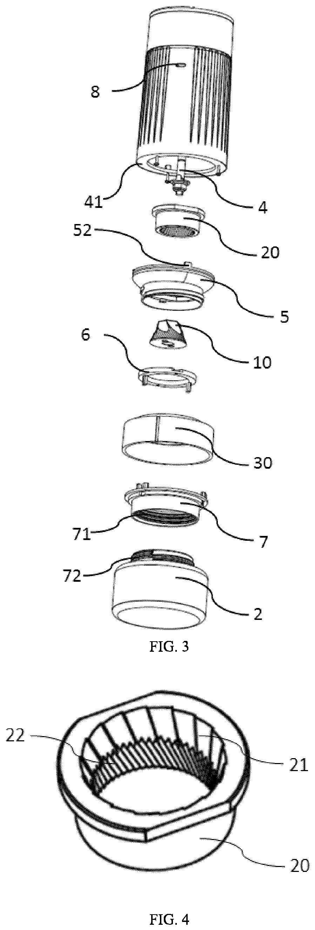

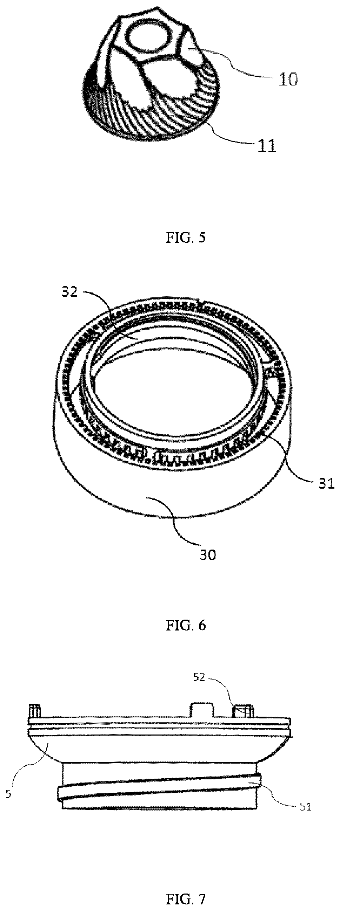

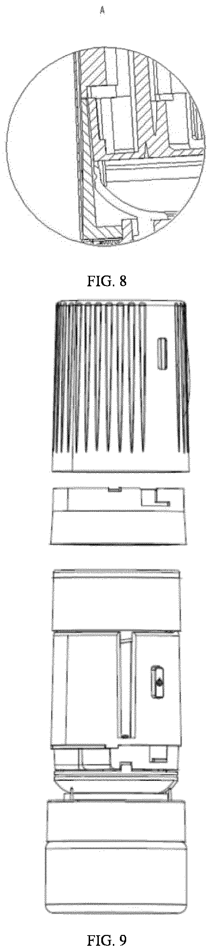

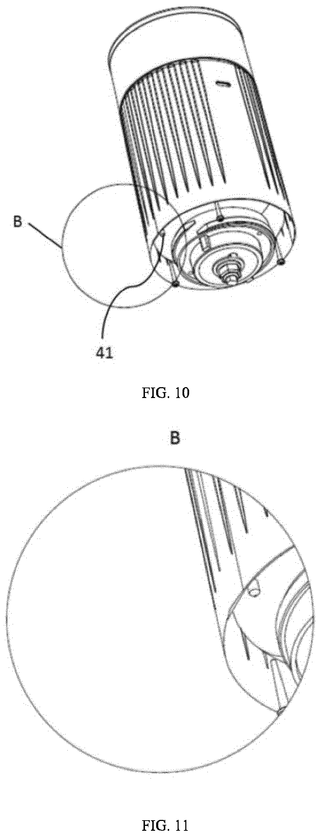

An embodiment of the present disclosure discloses a grinding device, as shown in FIGs. 1 to 11.

The grinding device comprises a housing 3; the housing 3 can be made of a plastic material or a metal material, the housing 3 is provided with a switch button 1, and the housing 3 is further provided with a charging port 8, a battery is provided inside the grinding device, the battery is rechargeable; and when the electric quantity of the battery is depleted, the battery can be recharged. The rechargeable battery is convenient to use and, is environmentally friendly, and is unnecessary to replace the battery frequently.

In some embodiments, the grinding device comprises a feeding mechanism and a material receiving mechanism 2, the feeding mechanism is provided on the upper portion of the device, and the material receiving mechanism 2 is provided on the bottom portion of the device.

In some embodiments, a positioning assembly 41 is provided at the lower end of the housing 3; and the positioning assembly 41 comprises a compression spring and a spring. The positioning assembly 41 has a stable structure, is convenient to use, and is suitable as a stopping assembly or for use in fixed-point, positioning, graduation, locking, latching, pushing-out, pushing-up and other similar push-on applications.

The grinding device comprises a motor and a motor fixing frame, and the motor is used for providing a driving force for the grinding device. During use, the operation or stop of the motor can be triggered by pressing or pushing the switch button 1, and the motor fixing frame is used for fixing the motor.

The grinding device is provided with a grinding mechanism, and the grinding mechanism comprises a male grinding head 10 and a female grinding head 20. The female grinding head 20 is generally of an annular structure, and the male grinding head 10 is of a circular truncated cone structure. The female grinding head 20 comprises a first portion and a second portion, and the first portion is located above the second portion; first grinding teeth 21 having a plurality of helical tooth lines is provided on an inner circumferential wall of the first portion; second grinding teeth 22 having a plurality of helical tooth lines is provided on an inner circumferential wall of the second portion; the number of the second grinding teeth 22 is greater than that of the first grinding teeth 21; coarse grinding can be performed by the first portion, and fine grinding can be performed by the second portion. Third grinding teeth 11 having a plurality of helical tooth lines is provided on an outer circumferential wall of the male grinding head 10, and a bottom surface of a tooth groove between adjacent third grinding teeth 11 is an arc-shaped surface. The design of the arc-shaped surface enables the ground material to be more easily guided out, and the grinding gap is not easily blocked, thereby improving the usage effect of grinding.

Further, tooth lines of the first grinding teeth 21, the second grinding teeth 22 and the third grinding teeth 11 are all of a helical structure.

Further, the cross sections of the first grinding teeth 21, the second grinding teeth 22 and the third grinding teeth 11 are similar to triangular structures.

Still further, the male grinding head 10 is rotatably fitted inside the female grinding head 20, a plurality of material discharging ports are formed at the material discharging end, and one end of each of the material discharging port is in an arc transition or a smooth transition to the other end. Such a design enables the material to smoothly move in the grinding gap without being hindered, ensures that the ground material is easy to fall down, and avoids poor taste and loss of nutritional value caused by excessive grinding.

In some embodiments, the first portion and the second portion of the female grinding head 20 are provided with a certain radian, and the upper end of the first portion is outwardly expanded, so that on the one hand, materials can enter the grinding mechanism, and on the other hand, the materials of the first portion can easily enter the second portion, thereby preventing the materials from being stuck to the first portion for a long time during grinding.

The male grinding head 10 and the female grinding head 20 must have good wear resistance and impact resistance toughness. The male grinding head 20 and the female grinding head 10 are made of metal materials, such as stainless steel, nickel chromium alloy, high chromium cast iron, and multi-element alloy.

The motor is provided with a driving shaft 4, the driving shaft 4 is rotatably connected to the motor, and the male grinding head 10 is connected to the motor by means of the driving shaft 4.

The housing 3 is provided with an adjustment mechanism for adjusting the position of the female grinding head 20. The adjustment mechanism comprises a female grinding head fixing seat 5 and a shifting ring 30, the female grinding head fixing seat 5 is slidably fitted in the housing 3, the shifting ring 30 is rotatably fitted outside the female grinding head fixing seat 5, and the female grinding head fixing seat 5 is used for fixing and limiting the position of the female grinding head 20.

A first thread 51 is provided on an outer circumferential wall of the female grinding head fixing seat 5, a second thread 32 is provided on an inner circumferential wall of the shifting ring 30, and the first thread 51 and the second thread 32 are mutually screwed to adjust the position of the female grinding head 20.

A sealing member is arranged between the female grinding head fixing seat 5 and the housing 3 to prevent grinding materials from leaking out of the grinding mechanism and entering the interior of the housing 3 to breed bacteria due to improper operation or shaking, thus deteriorating the health of the human body.

The grinding device further comprises a female grinding head fixing frame 6, and the female grinding head fixing frame 6 is embedded at the lower portion of the female grinding head 20.

A hollow toothed positioning hole 31 is provided on an upper portion of the shifting ring 30, and the positioning hole 31 are capable of aligning and positioning the positioning assembly 41. During use, the height of the female grinding head 20 can be adjusted by rotating the shifting ring 30, so as to adjust the gap between the male grinding head 10 and the female grinding head 20. During the rotation of the shifting ring 30, the positioning assembly 41 can fall into the positioning hole 31, the position of the female grinding head 20 is effectively fixed, and the gap between the male grinding head 10 and the female grinding head 20 is also fixed, thereby avoiding a change in the position of the female grinding head 20 due to inertia or shaking of the device during grinding, improving the stability of the whole grinding device, and ensuring the uniformity of the ground material. In addition, when the position of the female grinding head 20 is adjusted by rotating the shifting ring 30, and the limiting movement of the positioning assembly 41 in the positioning hole 31 can be sensed, thereby achieving more accurate positioning.

In another embodiment of the present disclosure, a limiting member 52 is provided on an upper end of the female grinding head fixing seat 5, the limiting member 52 is a protrusion, a hole is provided on the motor fixing frame, and the protrusion of the limiting member 52 is connected to the hole on the motor fixing frame, and the limiting member 52 is used for axially guiding and circumferentially limiting the female grinding head fixing seat 5, thereby preventing the circumferential movement of the female grinding head fixing seat 5 caused by rotating the shifting ring 30 to adjust the position of the female grinding head 20.

In yet another embodiment of the present disclosure, the grinding device comprises a connection seat 7, a third thread 71 is provided on the connection seat 7, the material receiving mechanism 2 comprises a body and a neck portion of the material receiving mechanism 2, a fourth thread 72 is provided on an outer circumferential wall of the neck portion, and the material receiving mechanism 2 is connected to the connection seat 7 by means of the fourth thread 72 and the third thread 71.

A grinding device disclosed in the present application is provided with a male grinding head 10 and a female grinding head 20. Different degrees of grinding can be performed by adjusting the gap between the male grinding head 10 and the female grinding head 20. The arrangement of the shifting ring 30 and the positioning assembly 41 of the grinding device further enhances the reliability and stability of the whole grinding device. In conclusion, the grinding device has a reasonable design, high stability, easy operation and good grinding effect.

The present application has been described in detail above, and specific examples are used herein to illustrate the principle and implementation of the present disclosure. The description of the above embodiments is only used to help understand the present application and the core idea.

## Claims

1. A grinding device, comprising a housing (3), a grinding mechanism and a motor in the housing (3), wherein the grinding mechanism comprises a male grinding head (10) and a female grinding head (20), the male grinding head (10) is rotatably fitted in the female grinding head (20), the motor is provided with a driving shaft (4), the male grinding head (10) is connected to the motor by means of the driving shaft (4), and the housing (3) is provided with an adjustment mechanism for adjusting the position of the female grinding head (20),
**characterized in that**
the adjustment mechanism comprises a female grinding head fixing seat (5) and a shifting ring (30), the female grinding head fixing seat (5) is slidably fitted in the housing (3), the shifting ring (30) is rotatably fitted outside the female grinding head fixing seat (5), and the female grinding head fixing seat (5) is used for fixing and limiting the position of the female grinding head (20), and
wherein a first thread (51) is provided on an outer circumferential wall of the female grinding head fixing seat (5), a second thread (32) cooperating with the first thread (51) is provided on an inner circumferential wall of the shifting ring (30), and the first thread (51) and the second thread (32) are screwed with each other.

2. The grinding device of claim 1, wherein a sealing member is arranged between the female grinding head fixing seat (5) and the housing (3), the female grinding head fixing seat (5) is provided with a limiting member (52), a motor fixing frame is provided inside the housing (3), and the motor fixing frame is used for fixing the motor, a hole is provided on the motor fixing frame, and the protrusion of the limiting member (52) is connected to the hole on the motor fixing frame, and the limiting member (52) is used for axially guiding and circumferentially limiting the female grinding head fixing seat (5).

3. The grinding device of claim 1, wherein a positioning assembly (41) is provided on a lower end of the housing (3), positioning holes (31) are provided on an upper portion of the shifting ring (30), and the positioning holes (31) are capable of aligning and positioning the positioning assembly (41).

4. The grinding device of claim 3, wherein the positioning holes (31) are hollow toothed.

5. The grinding device of claim 1, wherein the housing (3) is provided with a switch button (1).

6. A grinding device of claim 1, wherein the female grinding head (20) comprises a first portion and a second portion, and the first portion is located above the second portion, first grinding teeth (21) having a plurality of helical tooth lines are provided on an inner circumferential wall of the first portion, second grinding teeth (22) having a plurality of helical tooth lines are provided on an inner circumferential wall of the second portion, and the number of the second grinding teeth (22) is greater than that of the first grinding teeth (21); third grinding teeth (11) having a plurality of helical tooth lines is provided on an outer circumferential wall of the male grinding head (10), and a bottom surface of a tooth groove between adjacent third grinding teeth (11) is an arc-shaped surface.

7. The grinding device of claim 1, wherein the grinding device comprises a material receiving mechanism (2), the material receiving mechanism (2) is provided at the bottom of the grinding device, the material receiving mechanism (2) comprises a body and a neck portion of the material receiving mechanism (2), and a fourth thread (72) is provided on an outer circumferential wall of the neck portion; the grinding device comprises a connection seat (7), a third thread (71) is provided on the connection seat (7), and the material receiving mechanism (2) and the connection seat (7) are connected by means of a fourth thread (72) and a third thread (71).

8. The grinding device of claim 1, wherein the grinding device further comprises a female grinding head fixing frame (6), and the female grinding head fixing frame (6) is nested outside the female grinding head (20).

## Patentansprüche

1. Schleifvorrichtung, umfassend ein Gehäuse (3), einen Schleifmechanismus und einen Motor im Gehäuse (3), wobei der Schleifmechanismus einen männlichen Schleifkopf (10) und einen weiblichen Schleifkopf (20) umfasst, wobei der männliche Schleifkopf (10) drehbar im weiblichen Schleifkopf (20) gelagert ist, wobei der Motor mit einer Antriebswelle (4) versehen ist, wobei der männliche Schleifkopf (10) über die Antriebswelle (4) mit dem Motor verbunden ist und das Gehäuse (3) mit einem Verstellmechanismus zum Verstellen der Position des weiblichen Schleifkopfes (20) versehen ist,
**dadurch gekennzeichnet, dass**
der Verstellmechanismus einen weiblichen Schleifkopf-Fixiersitz (5) und einen Verschiebering (30) umfasst, der weibliche Schleifkopf-Fixiersitz (5) verschiebbar in dem Gehäuse (3) gelagert ist, der Verschiebering (30) drehbar außerhalb des weiblichen Schleifkopf-Fixiersitzes (5) gelagert ist, und der weibliche Schleifkopf-Fixiersitz (5) zum Fixieren und Begrenzen der Position des weiblichen Schleifkopfes (20) dient, und
wobei ein erstes Gewinde (51) an einer äußeren Umfangswand des weiblichen Schleifkopf-Fixiersitzes (5) vorgesehen ist, ein mit dem ersten Gewinde (51) zusammenwirkendes zweites Gewinde (32) an einer inneren Umfangswand des Verschieberings (30) vorgesehen ist und das erste Gewinde (51) und das zweite Gewinde (32) miteinander verschraubt sind.

2. Schleifvorrichtung nach Anspruch 1, wobei ein Dichtungselement zwischen dem weiblichen Schleifkopf-Fixiersitz (5) und dem Gehäuse (3) angeordnet ist, der weibliche Schleifkopf-Fixiersitz (5) mit einem Begrenzungselement (52) versehen ist, ein Motorbefestigungsrahmen innerhalb des Gehäuses (3) vorgesehen ist, und der Motorbefestigungsrahmen zur Befestigung des Motors dient, wobei an dem Motorbefestigungsrahmen ein Loch vorgesehen ist und der Vorsprung des Begrenzungselements (52) mit dem Loch an dem Motorbefestigungsrahmen verbunden ist und das Begrenzungselement (52) zur axialen Führung und Umfangsbegrenzung des weiblichen Schleifkopf-Fixiersitzes (5) dient.

3. Schleifvorrichtung nach Anspruch 1, wobei eine Positionierungsbaugruppe (41) an einem unteren Ende des Gehäuses (3) vorgesehen ist, wobei Positionierungslöcher (31) an einem oberen Abschnitt des Verschieberings (30) vorgesehen sind und die Positionierungslöcher (31) die Positionierungsbaugruppe (41) ausrichten und positionieren können.

4. Schleifvorrichtung nach Anspruch 3, wobei die Positionierungslöcher (31) hohlverzahnt sind.

5. Schleifvorrichtung nach Anspruch 1, wobei das Gehäuse (3) mit einem Schalterknopf (1) versehen ist.

6. Schleifvorrichtung nach Anspruch 1, wobei der weibliche Schleifkopf (20) einen ersten Abschnitt und einen zweiten Abschnitt umfasst und der erste Abschnitt über dem zweiten Abschnitt angeordnet ist, wobei erste Schleifzähne (21) aufweisend eine Mehrzahl von schraubenförmigen Zahnlinien an einer inneren Umfangswand des ersten Abschnitts vorgesehen sind, wobei zweite Schleifzähne (22) aufweisend eine Mehrzahl von schraubenförmigen Zahnlinien an einer inneren Umfangswand des zweiten Abschnitts vorgesehen sind, und die Anzahl der zweiten Schleifzähne (22) größer ist als die der ersten Schleifzähne (21); wobei dritte Schleifzähne (11) aufweisend eine Mehrzahl von spiralförmigen Zahnlinien an einer äußeren Umfangswand des männlichen Schleifkopfes (10) vorgesehen sind, und eine Bodenfläche einer Zahngröße zwischen benachbarten dritten Schleifzähnen (11) eine bogenförmige Fläche ist.

7. Die Schleifvorrichtung nach Anspruch 1, wobei die Schleifvorrichtung einen Materialaufnahmemechanismus (2) umfasst, wobei der Materialaufnahmemechanismus (2) am Boden der Schleifvorrichtung vorgesehen ist, wobei der Materialaufnahmemechanismus (2) einen Körper und einen Halsabschnitt des Materialaufnahmemechanismus (2) umfasst, und ein viertes Gewinde (72) an einer äußeren Umfangswand des Halsabschnitts vorgesehen ist; wobei die Schleifvorrichtung einen Verbindungssitz (7) umfasst, wobei ein drittes Gewinde (71) an dem Verbindungssitz (7) vorgesehen ist und der Materialaufnahmemechanismus (2) und der Verbindungssitz (7) mittels eines vierten Gewindes (72) und eines dritten Gewindes (71) verbunden sind.

8. Schleifvorrichtung nach Anspruch 1, wobei die Schleifvorrichtung ferner einen weiblichen Schleifkopf-Befestigungsrahmen (6) umfasst und der weibliche Schleifkopf-Befestigungsrahmen (6) außerhalb des weiblichen Schleifkopfes (20) verschachtelt ist.

## Revendications

1. Dispositif de broyage comprenant un boîtier (3), un mécanisme de broyage et un moteur dans le boîtier (3), dans lequel le mécanisme de broyage comprend une tête de broyage mâle (10) et une tête de broyage femelle (20), la tête de broyage mâle (10) est installée de manière rotative dans la tête de broyage femelle (20), le moteur est muni d'un arbre d'entraînement (4), la tête de broyage mâle (10) est reliée au moteur au moyen de l'arbre d'entraînement (4), et le boîtier (3) est muni d'un mécanisme de réglage pour régler la position de la tête de broyage femelle (20),
**caractérisé en ce que**
le mécanisme de réglage comprend un siège de fixation (5) de tête de broyage femelle et une bague de déplacement (30), le siège de fixation (5) de tête de broyage femelle est installé de manière coulissante dans le boîtier (3), la bague de déplacement (30) est installée de manière rotative à l'extérieur du siège de fixation (5) de tête de broyage femelle, et le siège de fixation (5) de tête de broyage femelle est utilisé pour fixer et limiter la position de la tête de broyage femelle (20), et
dans lequel un premier filetage (51) est disposé sur une paroi circonférentielle extérieure du siège de fixation (5) de tête de broyage femelle, un deuxième filetage (32) coopérant avec le premier filetage (51) est disposé sur une paroi circonférentielle intérieure de la bague de déplacement (30), et le premier filetage (51) et le deuxième filetage (32) sont vissés l'un sur l'autre.

2. Dispositif de broyage selon la revendication 1, dans lequel un élément d'étanchéité est agencé entre le siège de fixation (5) de tête de broyage femelle et le boîtier (3), le siège de fixation (5) de tête de broyage femelle est muni d'un élément de limitation (52), un cadre de fixation de moteur est disposé à l'intérieur du boîtier (3), et le cadre de fixation de moteur est utilisé pour fixer le moteur, un trou est disposé sur le cadre de fixation de moteur, et la saillie de l'élément de limitation (52) est reliée au trou sur le cadre de fixation de moteur, et l'élément de limitation (52) est utilisé pour guider axialement et limiter de manière circonférentielle le siège de fixation (5) de tête de broyage femelle.

3. Dispositif de broyage selon la revendication 1, dans lequel un ensemble de positionnement (41) est disposé sur une extrémité inférieure du boîtier (3), des trous de positionnement (31) sont disposés sur une partie supérieure de la bague de déplacement (30), et les trous de positionnement (31) sont aptes à aligner et positionner l'ensemble de positionnement (41).

4. Dispositif de broyage selon la revendication 3, dans lequel les trous de positionnement (31) sont dentés creux.

5. Dispositif de broyage selon la revendication 1, dans lequel le boîtier (3) est muni d'un bouton interrupteur (1).

6. Dispositif de broyage selon la revendication 1, dans lequel la tête de broyage femelle (20) comprend une première partie et une seconde partie, et la première partie est située au-dessus de la seconde partie, des premières dents de broyage (21) présentant une pluralité de lignes de dents hélicoïdales sont disposées sur une paroi circonférentielle intérieure de la première partie, des deuxièmes dents de broyage (22) présentant une pluralité de lignes de dents hélicoïdales sont disposées sur une paroi circonférentielle intérieure de la seconde partie, et le nombre des deuxièmes dents de broyage (22) est supérieur à celui des premières dents de broyage (21) ; des troisièmes dents de broyage (11) présentant une pluralité de lignes de dents hélicoïdales sont disposées sur une paroi circonférentielle extérieure de la tête de broyage mâle (10), et une surface inférieure d'une rainure de dent entre des troisièmes dents de broyage (11) adjacentes est une surface arquée.

7. Dispositif de broyage selon la revendication 1, dans lequel le dispositif de broyage comprend un mécanisme de réception de matière (2), le mécanisme de réception de matière (2) est disposé au fond du dispositif de broyage, le mécanisme de réception de matière (2) comprend un corps et une partie de rétrécissement du mécanisme de réception de matière (2), et un quatrième filetage (72) est disposé sur une paroi circonférentielle extérieure de la partie de rétrécissement ; le dispositif de broyage comprend un siège de liaison (7), un troisième filetage (71) est disposé sur le siège de liaison (7), et le mécanisme de réception de matière (2) et le siège de liaison (7) sont reliés au moyen d'un quatrième filetage (72) et d'un troisième filetage (71).

8. Dispositif de broyage selon la revendication 1, dans lequel le dispositif de broyage comprend en outre un cadre de fixation (6) de tête de broyage femelle, et le cadre de fixation (6) de tête de broyage femelle est emboîté à l'extérieur de la tête de broyage femelle (20).
